# FASCICULE DE BREVET EUROPEEN

(11) **EP 2 969 557 B1**
(45) Date de publication et mention de la délivrance du brevet: **28.12.2016**
(21) Numéro de dépôt: 13716340.8
(22) Date de dépôt: 11.03.2013
(51) Int. Cl.: B32B 25/08, C08G 81/02

(54) **COMPOSITE PLASTIQUE - ÉLASTOMÈRE, PIÈCE ANTIVIBRATOIRE L'INCORPORANT ET PROCÉDÉ DE FABRICATION DE CE COMPOSITE**
KUNSTSTOFFELASTOMERVERBUND, SCHWINGUNGSDÄMPFENDES TEIL DAMIT UND VERFAHREN ZUR HERSTELLUNG DES VERBUNDSTOFFES
PLASTIC-ELASTOMER COMPOSITE, ANTI-VIBRATION PART INCORPORATING SAME AND METHOD OF PRODUCING SAID COMPOSITE

(43) Date de publication de la demande: 20.01.2016
(73) Titulaire: Hutchinson, 75008 Paris (FR)
(72) Inventeur: FROMONT, Yann, FR - 95300 Pontoise (FR); LE ROSSIGNOL, Benoît, F-45200 Montargis (FR)
(74) Mandataire: Gevers & Orès
(86) Numéro de dépôt international: PCT/FR2013/050506
(87) Numéro de publication internationale: WO 2014/140433

(56) Documents cités:
- FR-A1- 2 611 209
- US-A- 5 132 182
- US-B2- 7 175 916

## Description

La présente invention concerne un composite comprenant une partie élastomère et une partie plastique solidaire de cette partie élastomère, une pièce antivibratoire incorporant ce composite et un procédé de fabrication de ce dernier. L'invention concerne en particulier les pièces antivibratoires, telles que des supports de moteurs ou des articulations élastiques, à titre non limitatif, qui sont utilisables dans tous domaines d'application comme par exemple dans des véhicules à moteur terrestres (e.g. automobiles, poids-lourds, notamment), ferroviaires, aériens, spatiaux, et également dans l'industrie.

Les pièces antivibratoires comportent généralement une partie en caoutchouc vulcanisé que l'on colle par adhérisation (i.e. via un ou plusieurs adhésifs) sur une armature métallique ou plastique. Pour des raisons d'allégement de ces pièces, on développe de plus en plus de telles pièces à armature plastique. Les adhésifs utilisés sont usuellement dissous dans un solvant, et sont pulvérisés sur l'armature plastique puis séchés. L'adhésion entre le caoutchouc et l'armature est ainsi réalisée par une réaction chimique qui a lieu durant la vulcanisation du caoutchouc, d'une part, entre le caoutchouc et l'adhésif et, d'autre part, entre l'adhésif et le plastique.

Ces composites sont typiquement soumis à des contraintes très importantes en utilisation, notamment en flexion, et doivent satisfaire à un grand nombre de critères techniques tels que la résistance au fluage, à l'eau, à la température et à la traction - compression, étant précisé que ces performances doivent être maintenues à un niveau très élevé aussi longtemps que possible. Or, on sait que l'interface adhésive entre les parties élastomère et plastique joue un rôle majeur dans la pérennité de ces performances.

Si l'interface adhésive obtenue entre plastique et caoutchouc est en général satisfaisante pour le composite, il n'en reste pas moins que ces adhésifs sont coûteux, polluants (à cause des solvants utilisés qui le plus souvent conduisent à la libération de composés organiques volatils ou « COV ») et présentent l'inconvénient d'imposer un procédé d'assemblage en plusieurs opérations, dont le dépôt du ou des adhésifs sur le plastique, en générant un coût de fabrication relativement élevé pour ce composite.

On a cherché récemment à se passer d'adhésif pour l'obtention d'une interface néanmoins adhérente entre plastique et caoutchouc d'une pièce composite antivibratoire, comme décrit dans le document US-B2-7 175 916 qui enseigne de solidariser par réticulation sous presse une partie en caoutchouc à un polyamide à l'aide d'un système de réticulation dépourvu de soufre qui comprend un peroxyde organique.

Un inconvénient majeur des composites obtenus dans ce document réside notamment dans la limitation à une réticulation au peroxyde des élastomères choisis, étant donné que les peroxydes ne sont pas les agents de réticulation les mieux adaptés pour réticuler certains élastomères diéniques fortement insaturés et les faire adhérer de manière satisfaisante à une matière plastique, contrairement aux systèmes de réticulation au soufre.

Un but de la présente invention est de proposer un composite comprenant une partie élastomère constituée d'une composition de caoutchouc vulcanisée (i.e. réticulée au moins par le soufre) à base d'au moins un élastomère diénique, et une partie plastique qui est à base d'au moins un polyamide et qui est solidaire par co-vulcanisation de la partie élastomère en une interface adhérente plastique - élastomère dépourvue d'adhésif, composite qui remédie aux inconvénients précités.

Par « partie élastomère » et « partie plastique », on entend dans la présente description de telles parties pouvant être continues ou discontinues (i.e. formées dans ce dernier cas de portions élastomères séparées et/ou de portions plastiques séparées qui sont chacune à base d'au moins un élastomère diénique ou d'au moins un polyamide, respectivement).

Ce but est atteint en ce que la Demanderesse vient de découvrir d'une manière surprenante que si l'on fait réagir par une réaction de Michael lors de la co-vulcanisation (i.e. de manière sensiblement simultanée avec la réticulation par chauffage de l'élastomère) un donneur de Michael nucléophile de type polyéther amine que comprend la partie plastique à base de polyamide(s) et un accepteur de Michael électrophile de type composé carbonylé α, β insaturé que comprend la partie élastomère, alors on forme avantageusement des liaisons covalentes à l'interface élastomère - plastique qui rendent cette interface suffisamment adhérente, pour que le composite obtenu soit utilisable pour constituer une pièce antivibratoire présentant notamment des propriétés mécaniques et dynamiques satisfaisantes.

On notera qu'un composite de l'invention, dont ladite interface comprend ces liaisons covalentes qui sont le produit d'une réaction de Michael entre ces donneur et accepteur de Michael, présente par co-vulcanisation une auto-adhésion satisfaisante, cette auto-adhésion se traduisant par une cohésion et une force de pelage très élevée pour séparer la partie élastomère de la partie plastique (i.e. avec rupture dans la partie élastomère lors du pelage du fait que l'adhésion obtenue est de type cohésive). En effet, cette adhésion cohésive témoigne de la nature covalente des liaisons chimiques formées à l'interface élastomère - plastique.

Rappelons que la réaction de Michael, qui appartient à la famille des additions nucléophiles conjuguées, permet la création de liaisons carbone-carbone par l'addition nucléophile d'un carbanion sur un composé carbonylé α,β insaturé, suivant l'équation-bilan: 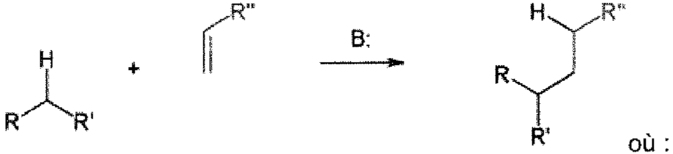
- les substituants R et R' sur le nucléophile (donneur de Michael) sont des groupes électro-attracteurs, ce qui rend l'hydrogène acide et entraîne la formation d'un carbanion par réaction avec une base B, et où
- le composé carbonylé α,β insaturé incluant le substituant R" est l'accepteur de Michael.

On notera également que l'invention témoigne de la découverte d'un effet de synergie entre la polyéther amine de la partie plastique et le composé carbonylé α, β insaturé de la partie élastomère, comme cela sera démontré à partir des essais présentés ci-dessous. En particulier, la Demanderesse a établi que les polyéther amines permettent de rendre ces liaisons covalentes, et l'adhésion cohésive qu'elles procurent suffisamment résistantes en fonctionnement.

On notera en outre qu'un composite selon l'invention est obtenu sans émission de « COV » et par un procédé de fabrication simple à mettre en oeuvre, du fait que ce composite est dépourvu d'adhésif donc de solvant à ladite interface, ce qui fait que ce composite de l'invention présente un coût de fabrication réduit.

Selon une autre caractéristique de l'invention, ledit accepteur de Michael est polyfonctionnel et apte à réagir, d'une part, avec ledit donneur de Michael pour former ladite interface adhérente et, d'autre part, avec des doubles liaisons dudit au moins un élastomère diénique pour le réticuler par réaction radicalaire ou de type Ene-Alder.

De préférence, cet accepteur de Michael polyfonctionnel est choisi dans le groupe constitué par les bis- ou poly- maléimides, acrylates, méthacrylates et leurs mélanges, étant précisé que d'autres composés carbonylés α, β insaturés sont utilisables pourvu qu'ils répondent à la formule générale -(O=C)-C^{α}=C^{β}- de ces composés. Par poly-maléimides, poly-acrylates et poly-méthacrylates, on entend des polymères ou oligomères de maléimides, d'acrylates ou de méthacrylates.

A titre encore plus préférentiel, ledit accepteur de Michael est un bismaléimide présent dans ladite composition selon une quantité égale ou supérieure à 2 pce et de préférence comprise entre 3 et 15 pce (pce : parties en poids pour cent parties d'élastomère(s)).

De manière connue, les bismaléimides répondent à la formule générale : 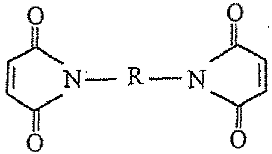 dans laquelle R est un radical hydrocarboné, aromatique ou aliphatique, cyclique ou acyclique, substitué ou non substitué, un tel radical pouvant comporter un hétéroatome choisi parmi O, N et S, et ce radical R comporte de préférence de 2 à 24 atomes de carbone.

Encore plus préférentiellement, le bismaléimide comporte deux groupes maléimide reliés entre eux par au moins un résidu aromatique, ce composé étant de préférence le N,N'-(m-phénylène)-bismaléimide (e.g. commercialisé sous le nom « HVA 2 »), le N,N'-(4,4'-diphénylméthane)-bismaléimide (e.g. commercialisé sous le nom « Homide 121 ») ou un copolymère diaminodiphénylméthanebismaléimide-diaminodiphénylméthane (e.g. commercialisé sous le nom « Homide 250 »).

On notera d'une manière générale qu'un accepteur de Michael utilisable selon l'invention est un co-agent difonctionnel qui, outre son aptitude à réagir avec les doubles liaisons de l'élastomère diénique, est choisi insoluble dans cet élastomère pour pouvoir migrer rapidement vers ladite interface.

Egalement à titre préférentiel et indépendamment du composé choisi pour ledit accepteur de Michael, ledit donneur de Michael est une polyéther diamine aliphatique de masse moléculaire moyenne en nombre comprise entre 1000 et 3000 g/mol, ce donneur de Michael étant présent dans ladite partie plastique selon une fraction massique égale ou supérieure à 1 %.

A titre encore plus préférentiel, ledit donneur de Michael est issu d'un polyéthylène glycol et présente des groupes amine primaire en extrémité de chaîne qui sont aptes à réagir avec des groupes acide carboxylique terminaux dudit au moins un polyamide, ce donneur de Michael étant présent dans ladite partie plastique selon une fraction massique comprise entre 3 % et 10 %.

Encore plus préférentiellement, ledit donneur de Michael répond à la formule suivante : 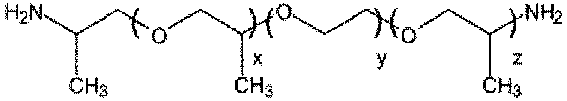 avec x+z sensiblement égal à 6, et y sensiblement égal à 39.

Outre leurs groupes fonctionnels amine primaire aux extrémités de chaîne et leur masse moléculaire spécifique, on notera que les polyéther amines utilisables selon l'invention sont solubles ou compatibles avec ledit au moins un polyamide choisi pour la partie plastique.

Selon un autre aspect de l'invention, ledit au moins un élastomère diénique peut avantageusement présenter un taux molaire d'unités issues de diènes conjugués supérieur à 50 %, ladite composition comprenant un système de vulcanisation au soufre ou bien au soufre et à un peroxyde, et ledit au moins un polyamide est choisi de type aliphatique tel qu'un PA 66 avantageusement renforcé par des fibres de verre.

Un tel élastomère diénique ayant un taux de motifs d'origine diénique (diènes conjugués) supérieur à 50 % est usuellement dit "fortement insaturé", et il peut s'agir d'un homopolymère obtenu par polymérisation d'un monomère diène conjugué ou d'un copolymère obtenu par copolymérisation d'un ou plusieurs diènes conjugués entre eux ou avec un ou plusieurs composés vinylaromatiques.

De préférence, ledit au moins un élastomère diénique est choisi dans le groupe constitué par le caoutchouc naturel (NR), les polyisoprènes de synthèse (IR) à enchaînements cis-1,4, les polybutadiènes (BR), les copolymères de butadiène-styrène (SBR), les copolymères de butadiène-isoprène (BIR), les copolymères d'isoprène-styrène (SIR), les copolymères de butadiène-styrène-isoprène (SBIR) et un mélange de deux ou plus de ces élastomères.

Selon un premier exemple de l'invention, ledit au moins un élastomère diénique est fonctionnalisé par des groupes époxy, avec un taux molaire de groupes époxy le long de la chaîne élastomère qui est égal ou supérieur à 20 % et de préférence inclusivement compris entre 25 % et 50 %.

Selon un second exemple préférentiel de l'invention, ledit au moins un élastomère diénique est un caoutchouc naturel ou un polyisoprène de synthèse à enchaînements cis-1,4, et n'est pas fonctionnalisé.

Une pièce antivibratoire selon l'invention comprend un composite plastique-élastomère dont une partie plastique forme une armature de la pièce, le composite étant tel que défini ci-dessus.

Un procédé de fabrication selon l'invention de ce composite comprend :
- une préparation d'une composition de caoutchouc vulcanisable destinée à former après co-vulcanisation la partie élastomère, par mélangeage dudit au moins un élastomère diénique non réticulé en présence dudit accepteur de Michael, d'un système de vulcanisation au soufre ou bien au soufre et à un peroxyde, et d'autres ingrédients,
- une préparation de la partie plastique par mélangeage par exemple dans une extrudeuse ou une bi-vis dudit au moins un polyamide en présence dudit donneur de Michael et d'autres additifs, puis son façonnage par injection par exemple à l'aide d'une presse, et
- une co-vuLcanisation de la partie élastomère vulcanisable disposée au contact de la partie plastique, pour la réticulation dudit au moins un élastomère et pour la formation sans adhésif de ladite interface adhérente par la réaction de Michael entre ledit donneur de Michael de la partie plastique et ledit accepteur de Michael de la partie élastomère.

On notera que cette combinaison synergétique des donneur et accepteur de Michael se traduit par une interface adhérente du caoutchouc exclusivement avec le plastique et pas avec des parois métalliques telles que celles de l'outillage, ce qui fait que l'on évite ainsi avantageusement toute adhésion indésirable du composite sur les parois en regard usuellement en métal du moule ou de la presse utilisées pour la vulcanisation.

On notera également que tant la partie élastomère que la partie plastique peuvent comprendre à titre d'autres ingrédients et additifs des charges renforçantes, des agents de protection, des agents de mise en oeuvre et des plastifiants, à titre non limitatif. S'agissant de la partie élastomère, elle comprend classiquement pour sa vulcanisation des accélérateurs, des activateurs (e.g. oxyde de zinc, acide stéarique) et des retardateurs.

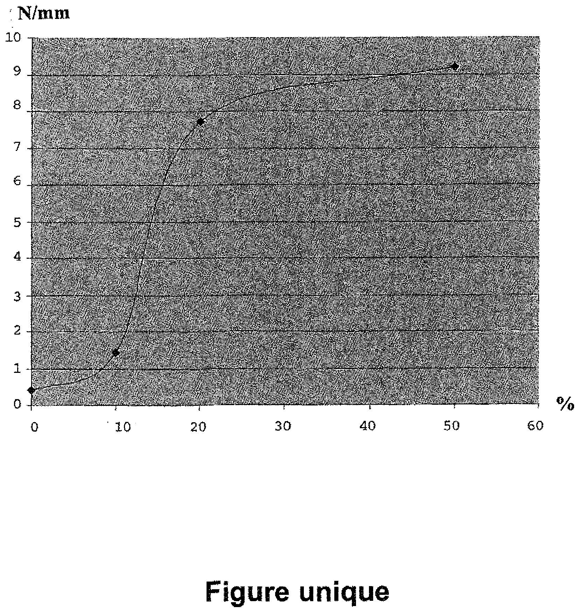

D'autres caractéristiques, avantages et détails de la présente invention ressortiront à la lecture de la description suivante de plusieurs exemples de réalisation de l'invention, donnés à titre illustratif et non limitatif, en référence au dessin joint, dans lequel :
La figure unique est un graphique illustrant l'évolution de la force de pelage (en N/mm) entre parties élastomère et plastique adhérentes d'un composite selon le premier exemple de l'invention, en fonction du taux molaire de groupes époxy d'un caoutchouc naturel fonctionnalisé.

Dans les exemples qui suivent, on désigne notamment par :
- Technyl A 218 GV 30 de la société Rhodia : un pré-mélange plastique à base d'un PA 66 et comprenant notamment 30 % en masse de fibres de verre et des agents de protection contre l'hydrolyse et la glycolyse,
- NR : un caoutchouc naturel de dénomination « GN 10 CV »,
- ENR 10, 20 et 50 : trois caoutchoucs naturels époxydés le long de leurs chaînes suivant des taux molaires respectifs de 10, 20 et 50 %,
- HVA 2 : un N,N'-(m-phénylène)-bismaléimide, et par
- Jeffamine ED 2003 : une polyéther amine selon l'invention.

On a préparé la partie plastique en mélangeant à l'aide d'une extrudeuse ou bi-vis ce Technyl A 218 GV 30 à l'agent modifiant (e.g. la Jeffamine ED 2003), puis en injectant le plastique ainsi mélangé dans une presse. Quant à la partie élastomère, on l'a préparée de manière classique par malaxage thermo-mécanique puis par co-vulcanisation sous presse.

On a réalisé les tests d'adhésion à l'aide d'éprouvettes de pelage moulées à 177° C, en suivant la norme ISO 813 (pelage à 90° C).

### 1) Essais d'adhésion, sur un plastique « témoin » à base de PA 66 et sans polyéther amine, de deux compositions de caoutchouc selon l'invention I1 et I2 à base d'un ENR et comprenant un bismaléimide et d'une composition de caoutchouc « témoin » T1 à base de NR sans bismaléimide:

**Tableau 1 :**

| ***Ingrédients (pce)*** | ***T1*** | ***I1*** | ***I2*** |
|---|---|---|---|
| *NR* | *100* | | |
| *ENR 50* | | *100* | *100* |
| *Noir de carbone* | *33* | *33* | *33* |
| *Plastifiant* | *3* | *3* | *3* |
| *Oxyde de zinc* | *5* | *5* | *5* |
| *Acide stéarique* | *2* | *2* | *2* |
| *Cire* | *2* | *2* | *2* |
| *TMQ* | *1* | *1* | *1* |
| *Antioxydant IPPD* | *1,5* | *1,5* | *1,5* |
| *Agent de mise en oeuvre* | *2* | 2 | *2* |
| *Santogard PVI* | *0,3* | *0,3* | *0,3* |
| *Soufre à 90%* | *1,55* | *1,55* | *1,55* |
| *MBTS* | *1,5* | *1,5* | *1,5* |
| *Dicup 40 C* | | *1,75* | |
| *HVA 2* | | *3,5* | *3,5* |
| *Agent de mise en oeuvre* | | *1* | *1* |

| ***Adhésion*** | | | |
|---|---|---|---|
| *Force d'adhésion sur Technyl A 218 GV 30 non modifié (N*/*mm)* | *0* | *8,89* | *8,66* |

On n'a pas observé d'adhésion avec la composition T1 entre un NR vulcanisé au soufre et le polyamide, alors que l'on a observé une adhésion initiale satisfaisante avec les caoutchoucs naturels fonctionnalisés des compositions I1 et I2, que ce soit avec un système de vulcanisation mixte soufre + peroxyde (I1) ou seulement au soufre (I2).

### 2) Essais d'adhésion, sur un plastique « témoin » à base de PA 66 et sans polyéther amine, de deux compositions de caoutchouc selon l'invention I2 et I3 respectivement à base de NR et d'un ENR et comprenant toutes deux un bismaléimide:

**Tableau 2 :**

| ***Ingrédients (pce)*** | ***I3*** | ***I2*** |
|---|---|---|
| *NR* | *100* | |
| *ENR 50* | | *100* |
| *Noir de carbone* | *33* | *33* |
| *Plastifiant* | *3* | *3* |
| *Oxyde de zinc* | *5* | *5* |
| *Acide stéarique* | *2* | *2* |
| *Cire* | *2* | *2* |
| *TMQ* | *1* | *1* |
| *Antioxydant IPPD* | *1,5* | *1,5* |
| *Agent de mise en oeuvre* | *2* | *2* |
| *Santogard PVI* | *0,3* | *0,3* |
| *Soufre à 90 %* | *1,55* | *1,55* |
| *MBTS* | *1,5* | *1,5* |
| *HVA 2* | *3,5* | *3,5* |
| *Agent de mise en oeuvre* | *1* | *1* |

| ***Adhésion*** | | |
|---|---|---|
| *Adhésion sur Technyl A 218 GV* 30 *non modifié (N*/*mm)* | 0 | *8,66* |

Ces essais montrent que l'utilisation d'un élastomère diénique fonctionnalisé époxy vulcanisé au soufre (composition I2) permet de faciliter l'adhésion avec le polyamide, en comparaison du NR également vulcanisé au soufre (composition I3).

La Figure unique montre que l'adhésion initiale élastomère - polyamide est d'autant meilleure que le taux d'époxydation du caoutchouc naturel est plus élevé, voir les résultats d'adhésion obtenus avec les trois taux d'époxydation de 10, 20 et 50 %.

### 3) Propriété mécaniques statiques et dynamiques de trois compositions de caoutchouc selon l'invention I4, I5, I6 respectivement à base de trois ENR et comprenant un bismaléimide, en comparaison d'une composition « témoin » T2 à base de NR et sans bismaléimide:

**Tableau 3 :**

| ***Ingrédients* (*pce*)** | ***T2*** | ***I4*** | ***I5*** | ***I6*** |
|---|---|---|---|---|
| *GN 10 CV* | *100* | | | |
| *ENR 10* | | *100* | | |
| *ENR 25* | | | *100* | |
| *ENR 50* | | | | *100* |
| *Noir de carbone* | *33* | *33* | *33* | *33* |
| *Plastifiant* | *3* | *3* | *3* | *3* |
| *Oxyde de zinc* | *5* | *5* | *5* | *5* |
| *Acide stéarique* | *2* | *2* | *2* | *2* |
| *Cire* | *2* | *2* | *2* | *2* |
| *TMQ* | *1* | *1* | *1* | *1* |
| *Antioxydant IPPD* | *1,5* | *1,5* | *1,5* | *1,5* |
| *Agent de mise en oeuvre* | *2* | *2* | *2* | *2* |
| *Santogard PVI* | *0,3* | *0,3* | *0,3* | *0,3* |
| *Soufre à 90* % | *1,55* | *1,55* | *1,55* | *1,55* |
| *MBTS* | *1,5* | *1,5* | *1,5* | *1,5* |
| *HVA 2* | | *3,5* | *3,5* | *3,5* |
| *Agent de mise en oeuvre* | *1* | *1* | *1* | |

| ***Propriétés mécaniques à l'état initial*** | | | | |
|---|---|---|---|---|
| *Contrainte rupture (MPa)* | *28* | *25,6* | *21,6* | *21,0* |
| *Allongement rupture (%)* | *580* | *628* | *580* | *595* |
| *Déchirement Delft (N*/*mm)* | *75* | *68,30* | *22,65* | *20,56* |
| *Dureté shore A* (15 *s*) | *50* | *48,1* | *48,1* | *50,6* |

| ***Propriétes dynamiques*** | | | | |
|---|---|---|---|---|
| *G* à 3 Hz* | *720* | *685,44* | *677,15* | *735,29* |
| *Tan Delta à 3 Hz* | *0,04* | *0,052* | *0,069* | *0,079* |

Ces résultats (voir notamment les compositions T2 et I6) montrent que l'utilisation d'un caoutchouc naturel époxydé conduit néanmoins à une détérioration des propriétés mécaniques statiques (contrainte à la rupture, déchirement), dynamiques (augmentation de l'amortissement, voir tangente delta) et de tenue au froid (température de transition vitreuse).

### 4) Essais d'adhésion initiale, sur un plastique « témoin » à base de PA 66 et sans polyéther amine, d'une composition selon l'invention I7 à base de NR et comprenant un bismaléimide et d'une composition « témoin » T1 à base de NR mais sans bismaléimide:

**Tableau 4 :**

| ***Référence*** | ***T1*** | ***I7*** |
|---|---|---|
| *NR* | *100* | *100* |
| *Noir de carbone* | *33* | *33* |
| *Plastifiant* | *3* | *3* |
| *ZnO* | *5* | *5* |
| *Acide stéarique* | *2* | *2* |
| *Dispersion Utasol* | *2* | *2* |
| *TMQ* | *1* | *1* |
| *Antioxydant IPPD* | *1,5* | *1,5* |
| *Agent de mise en oeuvre* | *2* | *2* |
| *Santogard PVI* | *0,3* | *0,3* |
| *Soufre à 90 %* | *1,55* | *1,55* |
| *MBTS* | *1,5* | *1,5* |
| *HVA 2* | | *4,5* |
| *Agent de mise en oeuvre* | | *1* |

| ***Adhésion initiale sur Technyl A* 218 *GV 30 non modifié*** | | |
|---|---|---|
| *Force d'adhésion (N*/*mm)* | *0* | *3,5* |

Ces résultats montrent que le bismaléimide de la composition I7 permet d'obtenir une adhésion initiale entre le caoutchouc naturel vulcanisé au soufre et le PA 66.

### 5 Essais d'adhésion, sur un plastiques « témoin » à base de PA 66 et sans polyether amine, de quatre compositions de caoutchouc selon l'invention I8 I9, I10, I11 à base de NR et comprenant des quantités différentes de bismaléimide:

**Tableau 5 :**

| ***Ingrédient*** | | ***I8*** | ***I9*** | ***I10*** | ***I11*** |
|---|---|---|---|---|---|
| *HVA 2* | *pce* | *4,5* | *5,5* | *7,5* | *9,5* |

| ***Adhésion initiale*** | | | | | |
|---|---|---|---|---|---|
| *Adhésion sur Technyl A 218 GV 30 non modifié* | *N*/*mm* | *3,50* | *14,65* | *12,01* | *10,22* |

Ces résultats montrent que plus la quantité de bismaléimide est élevée, meilleure est l'adhésion entre le caoutchouc naturel et le PA 66, avec en particulier une adhésion très satisfaisante obtenue avec une quantité de bismaléimide supérieure à 5 pce.

### 6) Essais d'adhésion de la composition selon l'invention I7 testée en 4) sur un plastique de l'invention à base de PA 66 et comprenant une polyéther amine et sur cinq plastiques « témoin » PT1 à PT5 à base de PA 66 mais modifiés par d'autres agents:

On a formulé six compositions plastiques toutes à base du pré-mélange précité à base de PA 66, en y ajoutant par extrusion une polyéther amine de l'invention pour la composition PI1 (Jeffamine ED 2003, également disponible sous le nom Elastamine RE 2003) qui répond à la formule NH₂CH(CH₃)CH₂[OCH(CH₃)CH₂]ₓ-[OCH₂CH₂]_{y}-[OCH₂CH(CH₃)]_{z}-NH₂.

**Tableau 6 :**

| ***Ingrédients*** | ***fractions massiques en %*** | | | | | |
|---|---|---|---|---|---|---|
| *Compositions plastiques* | *PT1* | *PT2* | *PT3* | *PT4* | *PT5* | *PI1* |
| *Polyamide Technyl A 218 GV 30* | *98* | *98* | *95* | *95* | *95* | *95* |
| *Hexamethylènediamine (HMDA)* | *2* | | | | | |
| *Triethoxyaminopropylsilane (AMEO)* | | *2* | | | | |
| *IPPD* | | | *5* | | | |
| *Epikote 1010 (résine époxy)* | | | | *5* | | |
| *Résine SP 1068 (résine phénolique)* | | | | | *5* | |
| *Jeffamine ED 2003* | | | | | | *5* |

| ***Adhésion*** | | | | | | |
|---|---|---|---|---|---|---|
| *Adhésion sur la composition I7 (N*/*mm)* | *1*,*05* | *2,40* | *1,34* | *2,96* | *1,69* | *8,66* |

Ces résultats montrent que seule la composition plastique de l'invention PI1 procure une adhésion satisfaisante avec la composition de caoutchouc I7 de l'invention, grâce à la réaction entre la polyéther amine présente dans PI1 et le bismaléimide dans 17.

Comme expliqué ci-dessus, on notera que cette polyéther amine permet de former des liaisons covalentes à l'interface plastique - élastomère grâce à sa réaction chimique avec le bismaléimide, avec une adhésion cohésive suffisamment résistante en fonctionnement.

En effet, selon l'invention, on fait réagir ce bismaléimide avec la polyéther amine pour former l'interface adhérente puis, de manière quasiment concomitante, avec les doubles liaisons du caoutchouc naturel pour le réticuler par réaction radicalaire.

### 7) Essais de cohésion de la composition de caoutchouc selon l'invention testée en 4), sur le plastique de l'invention PI1 testé en 6) comprenant une polyéther amine et sur d'autres plastiques « témoin » à base de PA 66 mais dépourvus de ou modifiés par d'autres polyéther amines:

**Tableau 7 :**

| ***Polyéther amine mélangée à 5 % en poids au Technyl A 218 GV 30*** | ***Taux de cohésion avec la composition I7 (%)*** |
|---|---|
| *Sans polyéther amine* | *0* |
| *Avec Jeffamine D-2000* | *25* |
| *Avec Jeffamine ED-2003 (composition de l'invention PI1)* | *100* |
| *Avec Jeffamine T-3000* | *22* |
| *Avec Jeffamine T-5000* | *15* |

Ces résultats montrent que dans la famille des polyéther amines, seul la Jeffamine ED 2003 contenue dans la composition plastique PI1 permet d'améliorer cette adhésion par sa réaction avec le bismaléimide de la composition de caoutchouc I7 en donnant un taux de rupture cohésive de 100 %.

La Demanderesse a par ailleurs découvert que la force de pelage et la cohésion sont d'autant plus fortes que la quantité de Jeffamine ED 2003 est plus élevée. En effet, des tests de pelage normal respectivement avec des fractions massiques de 1 % et de 5 % de Jeffamine ED 2003, ont démontré une augmentation significative de la force de pelage avec 5 % de cette polyéther amine.

## Revendications

1. Composite comprenant une partie élastomère constituée d'une composition de caoutchouc vulcanisée à base d'au moins un élastomère diénique et une partie plastique qui est à base d'au moins un polyamide et qui est solidaire par co-vulcanisation de la partie élastomère en une interface adhérente plastique - élastomère dépourvue d'adhésif, **caractérisé en ce que** ladite interface comprend des liaisons covalentes qui sont le produit d'une réaction de Michael entre un donneur de Michael nucléophile de type polyéther amine que comprend la partie plastique et un accepteur de Michael électrophile de type composé carbonylé α, β insaturé que comprend la partie élastomère.

2. Composite selon la revendication 1, **caractérisé en ce que** ledit accepteur de Michael est polyfonctionnel en étant apte à réagir, d'une part, avec ledit donneur de Michael pour former ladite interface adhérente et, d'autre part, avec ledit au moins un élastomère diénique pour le réticuler par réaction radicalaire ou de type Ene-Alder.

3. Composite selon la revendication 2, **caractérisé en ce que** ledit accepteur de Michael polyfonctionnel est choisi dans le groupe constitué par les bis- ou poly- maléimides, acrylates, méthacrylates et leurs mélanges.

4. Composite selon la revendication 3, **caractérisé en ce que** ledit accepteur de Michael est un bismaléimide présent dans ladite composition selon une quantité égale ou supérieure à 2 pce et de préférence comprise entre 3 et 15 pce (pce : parties en poids pour cent parties d'élastomère(s)).

5. Composite selon la revendication 4, **caractérisé en ce que** ledit bismaléimide comporte deux groupes maléimide reliés entre eux par au moins un résidu aromatique, ce composé étant de préférence le N,N'-(m-phénylène)-bismaléimide, le N,N'-(4,4'-diphénylméthane)-bismaléimide ou un copolymère diaminodiphénylméthanebismaléimide-diaminodiphénylméthane.

6. Composite selon une des revendications précédentes, **caractérisé en ce que** ledit donneur de Michael est une polyéther diamine aliphatique de masse moléculaire moyenne en nombre comprise entre 1000 et 3000 g/mol, ce donneur de Michael étant présent dans ladite partie plastique selon une fraction massique égale ou supérieure à 1 %.

7. Composite selon la revendication 6, **caractérisé en ce que** ledit donneur de Michael est issu d'un polyéthylène glycol et présente des groupes amine primaire en extrémité de chaîne qui sont aptes à réagir avec des groupes acide carboxylique terminaux dudit au moins un polyamide, ce donneur de Michael étant présent dans ladite partie plastique selon une fraction massique comprise entre 3 % et 10 %.

8. Composite selon la revendication 7, **caractérisé en ce que** ledit donneur de Michael répond à la formule suivante : 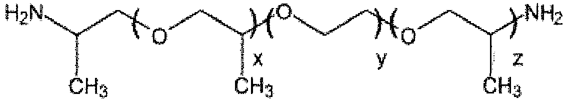 avec x+z sensiblement égal à 6, et y sensiblement égal à 39.

9. Composite selon une des revendications précédentes, **caractérisé en ce que** ledit au moins un élastomère diénique présente un taux molaire d'unités issues de diènes conjugués supérieur à 50 %, ladite composition comprenant un système de vulcanisation au soufre ou bien au soufre et à un peroxyde, et **en ce que** ledit au moins un polyamide est de type aliphatique.

10. Composite selon la revendication 9, **caractérisé en ce que** ledit au moins un élastomère diénique est choisi dans le groupe constitué par le caoutchouc naturel (NR), les polyisoprènes de synthèse (IR) à enchaînements cis-1,4, les polybutadiènes (BR), les copolymères de butadiène-styrène (SBR), les copolymères de butadiène-isoprène (BIR), les copolymères d'isoprène-styrène (SIR), les copolymères de butadiène-styrène-isoprène (SBIR) et un mélange de deux ou plus de ces élastomères.

11. Composite selon la revendication 10, **caractérisé en ce que** ledit au moins un élastomère diénique est fonctionnalisé par des groupes époxy, avec un taux molaire de groupes époxy le long de la chaîne élastomère qui est égal ou supérieur à 20 % et de préférence inclusivement compris entre 25 % et 50 %.

12. Composite selon la revendication 10, **caractérisé en ce que** ledit au moins un élastomère diénique est un caoutchouc naturel ou un polyisoprène de synthèse à enchaînements cis-1,4, et n'est pas fonctionnalisé.

13. Composite selon une des revendications 9 à 12, **caractérisé en ce que** ledit au moins un polyamide est un PA 66, et de préférence **en ce que** ladite partie plastique comprend en outre des fibres de verre.

14. Pièce antivibratoire comprenant un composite plastique - élastomère dont une partie plastique forme une armature de la pièce, **caractérisée en ce que** le composite est tel que défini à l'une des revendications précédentes.

15. Procédé de fabrication d'un composite selon une des revendications 1 à 13, **caractérisé en ce qu'**il comprend :
- une préparation d'une composition de caoutchouc vulcanisable destinée à former après co-vulcanisation ladite partie élastomère, par mélangeage dudit au moins un élastomère diénique non réticulé en présence dudit accepteur de Michael, d'un système de vulcanisation au soufre ou bien au soufre et à un peroxyde, et d'autres ingrédients,
- une préparation de ladite partie plastique par mélangeage dudit au moins un polyamide en présence dudit donneur de Michael et d'autres additifs, et
- une co-vulcanisation de la partie élastomère vulcanisable disposée au contact de la partie plastique, pour la réticulation dudit au moins un élastomère et pour la formation sans adhésif de ladite interface adhérente par la réaction de Michael entre ledit donneur de Michael de la partie plastique et ledit accepteur de Michael de la partie élastomère.

## Patentansprüche

1. Verbundstoff, umfassend einen Elastomerteil, der aus einer vulkanisierten Kautschukzusammensetzung besteht, basierend auf mindestens einem Dienelastomer, und einen Kunststoffteil, basierend auf mindestens einem Polyamid und der durch Co-Vulkanisation des Elastomerteils in einer haftenden Kunststoff-Elastomer-Schnittstelle ohne Klebstoff fest verbunden ist, **dadurch gekennzeichnet, dass** die Schnittstelle kovalente Bindungen umfasst, die das Produkt einer Michael-Reaktion zwischen einem nukleophilen Michael-Donor vom Typ Polyetheramin sind, den der Kunststoffteil umfasst, und einem elektrophilen Michael-Akzeptor vom Typ ungesättigter Carbonylverbindung α, β, den der Elastomerteil umfasst.

2. Verbundstoff nach Anspruch 1, **dadurch gekennzeichnet, dass** der Michael-Akzeptor polyfunktional ist, indem er dazu in der Lage ist, einerseits mit dem Michael-Donor zu reagieren, um die haftende Schnittstelle zu bilden, und andererseits mit dem mindestens einen Dienelastomer, um es durch radikalische Reaktion oder vom Typ Ene-Alder zu vernetzen.

3. Verbundstoff nach Anspruch 2, **dadurch gekennzeichnet, dass** der polyfunktionale Michael-Akzeptor ausgewählt ist aus der Gruppe, bestehend aus Bis- oder Polymaleimiden, Acrylaten, Methacrylaten und ihren Mischungen.

4. Verbundstoff nach Anspruch 3, **dadurch gekennzeichnet, dass** der Michael-Akzeptor ein Bismaleimid ist, das in der Zusammensetzung in einer Menge von gleich oder mehr als 2 pce und vorzugsweise im Bereich zwischen 3 und 15 pce vorhanden ist (pce: Gewichtsteile auf hundert Elastomerteile).

5. Verbundstoff nach Anspruch 4, **dadurch gekennzeichnet, dass** das Bismaleimid zwei Maleimidgruppen umfasst, die unter sich durch mindestens einen aromatischen Rückstand verbunden sind, wobei diese Verbindung vorzugsweise N,N'-(m-Phenylen)-bismaleimid, N,N'-(4,4'-Diphenylmethan)-bismaleimid oder ein Diaminodiphenylmethanbismaleimid-diaminodiphenylmethan-Copolymer ist.

6. Verbundstoff nach einem der vorhergehenden Ansprüche, **dadurch gekennzeichnet, dass** der Michael-Donor ein aliphatisches Polyetherdiamin mit einem Zahlenmittel der Molekülmasse im Bereich zwischen 1000 und 3000 g/mol ist, wobei dieser Michael-Donor in dem Kunststoffteil in einer Massenfraktion von gleich oder mehr als 1 % vorhanden ist.

7. Verbundstoff nach Anspruch 6, **dadurch gekennzeichnet, dass** der Michael-Donor aus einem Polyethylenglykol stammt und primäre Aminogruppen am Kettenende aufweist, die dazu in der Lage sind, mit terminalen Carbonsäuregruppen des mindestens einen Polyamids zu reagieren, wobei dieser Michael-Donor in dem Kunststoffteil in einer Massenfraktion im Bereich von 3 % und 10 % vorhanden ist.

8. Verbundstoff nach Anspruch 7, **dadurch gekennzeichnet, dass** der Michael-Donor die folgende Formel aufweist: 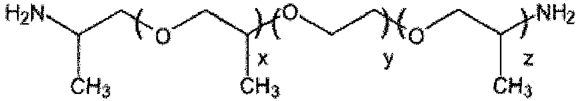 wobei x+z im Wesentlichen gleich 6 und y im Wesentlichen gleich 39 ist.

9. Verbundstoff nach einem der vorhergehenden Ansprüche, **dadurch gekennzeichnet, dass** das mindestens eine Dienelastomer ein Molverhältnis von Einheiten aus konjugierten Dienen von mehr als 50 % aufweist, wobei die Zusammensetzung ein System zur Vulkanisation mit Schwefel oder auch mit Schwefel und mit einem Peroxid umfasst, und dadurch, dass das mindestens eine Polyamid der aliphatischen Art ist.

10. Verbundstoff nach Anspruch 9, **dadurch gekennzeichnet, dass** das mindestens eine Dienelastomer ausgewählt ist aus der Gruppe, bestehend aus natürlichem Kautschuk (NR), Synthesepolyisoprenen (IR) mit cis-1,4-Verkettungen, Polybutadienen (BR), Butadienstyren-Copolymeren (SBR), Butadienisoprencopolymeren (BIR), Isoprenstyrencopolymeren (SIR), Butadienstyrenisoprencopolymeren (SBIR) und einer Mischung aus zwei oder mehreren dieser Elastomere.

11. Verbundstoff nach Anspruch 10, **dadurch gekennzeichnet, dass** das mindestens eine Dienelastomer durch Epoxygruppen mit einem Molverhältnis von Epoxygruppen entlang der Elastomerkette funktionalisiert ist, das gleich oder größer als 20 % und vorzugsweise einschließlich im Bereich zwischen 25 % und 50 % liegt.

12. Verbundstoff nach Anspruch 10, **dadurch gekennzeichnet, dass** das mindestens eine Dienelastomer ein natürlicher Kautschuk oder ein Synthesepolyisopren mit cis-1,4-Verkettungen ist und nicht funktionalisiert ist.

13. Verbundstoff nach einem der Ansprüche 9 bis 12, **dadurch gekennzeichnet, dass** das mindestens eine Polyamid ein PA 66 ist, und vorzugsweise dadurch, dass der Kunststoffteil außerdem Glasfasern umfasst.

14. Antivibrationsstück, umfassend einen Kunststoff-Elastomer-Verbundstoff, wobei ein Kunststoffteil eine Armierung des Stücks bildet, **dadurch gekennzeichnet, dass** der Verbundstoff wie in einem der vorhergehenden Ansprüche definiert ist.

15. Verfahren zur Herstellung eines Verbundstoffs nach einem der Ansprüche 1 bis 13, **dadurch gekennzeichnet, dass** es Folgendes umfasst:
- eine Zubereitung einer vulkanisierbaren Kautschukzusammensetzung, ausgelegt um, nach der Co-Vulkanisation, den Elastomerteil zu bilden, durch Mischung des mindestens einen nicht vernetzten Dienelastomers in Anwesenheit des Michael-Akzeptors mit einem System zur Vulkanisation mit Schwefel oder auch mit Schwefel und mit einem Peroxid und mit anderen Bestandteilen,
- eine Zubereitung des Kunststoffteils durch Mischung des mindestens einen Polyamids in Anwesenheit des Michael-Donors mit anderen Zusatzstoffen, und
- eine Co-Vulkanisation des vulkanisierbaren Elastomerteils, der in Kontakt mit dem Kunststoffteil abgelegt ist, zur Vernetzung des mindestens einen Elastomers und zur Bildung ohne Klebstoff der haftenden Schnittstelle durch die Michael-Reaktion zwischen dem Michael-Donor des Kunststoffteils und dem Michael-Akzeptor des Elastomerteils.

## Claims

1. Composite comprising an elastomer portion consisting of a vulcanised rubber composition containing at least one diene elastomer and a plastic portion based on at least one polyamide and that is connected by co-vulcanisation of the elastomer portion at an adhesive plastic-elastomer interface not containing any adhesive, **characterised in that** said interface comprises covalent bonds that are the product of a Michael reaction between a nucleophilic Michael donor of the polyether amine type comprised in the plastic portion and an electrophilic Michael acceptor of the α,β-unsaturated carbonyl compound type that is comprised in the elastomer portion.

2. Composite according to claim 1, **characterised in that** said Michael acceptor is polyfunctional and capable of reacting, on the one hand, with said Michael donor to form said adhesive interface and, on the other hand, with said at least one diene elastomer to crosslink said elastomer by a graft-radical reaction or an Ene-Alder type reaction.

3. Composite according to claim 2, **characterised in that** said polyfunctional Michael acceptor is chosen from the group consisting of the bismaleimides or polymaleimides, acrylates, methacrylates, and the mixtures thereof.

4. Composite according to claim 3, **characterised in that** said Michael acceptor is a bismaleimide present in said composition in an amount greater than or equal to 2 pce and preferably between 3 and 15 pce (pce: parts by weight per 100 parts of elastomers).

5. Composite according to claim 4, **characterised in that** said bismaleimide comprises two maleimide groups connected together by at least one aromatic residue, this compound preferably being N,N'-(m-phenylene)-bismaleimide, N,N'-(4,4'-diphenylmethane)-bismaleimide or a diaminodiphenylmethanebismaleimide-diaminodiphenylmethane copolymer.

6. Composite according to any one of the preceding claims, **characterised in that** said Michael donor is an aliphatic polyether diamine having an average-number molecular weight between 1000 and 3000g/mol, this Michael donor being present in said plastic portion in a mass fraction greater than or equal to 1%.

7. Composite according to claim 6, **characterised in that** said Michael donor is obtained from a polyethylene glycol and has, at the end of the chain, primary amine groups that are capable of reacting with carboxylic acid end groups of said at least one polyamide, this Michael donor being present in said plastic portion in a mass fraction between 3% and 10%.

8. Composite according to claim 7, **characterised in that** said Michael donor satisfies the following formula: 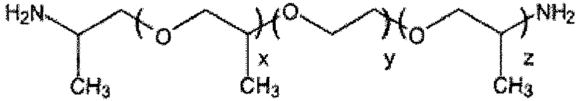 with x+z substantially equal to 6 and y substantially equal to 39.

9. Composite according to one of the previous claims, **characterised in that** said at least one diene elastomer has a molar concentration of units obtained from conjugated dienes of greater than 50%, said composition comprising a system for vulcanisation with sulphur or with sulphur and a peroxide, and **in that** said at least one polyamide is of aliphatic type.

10. Composite according to claim 9, **characterised in that** said at least one diene elastomer is chosen from the group consisting of natural rubber (NR), the synthetic polyisoprenes (IR) having cis-1,4 units, the polybutadienes (BR), the butadiene-styrene copolymers (SBR), the butadiene-isoprene copolymers (BIR), the isoprene-styrene copolymers (SIR), the butadiene-styrene-isoprene copolymers (SBIR), and a mixture of two or more of these elastomers.

11. Composite according to claim 10, **characterised in that** said at least one diene elastomer is functionalised by epoxy groups, with a molar concentration of epoxy groups along the elastomer chain greater than or equal to 20% and preferably from 25% to 50% inclusively.

12. Composite according to claim 10, **characterised in that** said at least one diene elastomer is a natural rubber or a synthetic polyisoprene having cis-1,4 units and is not functionalised.

13. Composite according to one of claims 9 to 12, **characterised in that** said at least one polyamide is a PA 66, and preferably **in that** said plastic portion further comprises glass fibres.

14. Anti-vibration part comprising a plastic-elastomer composite, a plastic portion of which forms a frame of the part, **characterised in that** the composite is a composite as defined in one of the previous claims.

15. Method for manufacturing a composite according to any one of claims 1 to 13, **characterised in that** said method comprises:
- preparation of a vulcanisable rubber composition, intended to form said elastomer portion after co-vulcanisation, by mixing said at least one non-crosslinked diene elastomer in the presence of said Michael acceptor, of a system for vulcanisation with sulphur or with sulphur and a peroxide, and of other ingredients,
- preparation of said plastic portion by mixing said at least one polyamide in the presence of said Michael donor and other additives, and
- co-vulcanisation of the vulcanisable elastomer portion placed in contact with the plastic portion, for the cross-linking of said at least one elastomer and for the formation, without an adhesive, of said adhesive interface via the Michael reaction between said Michael donor of the plastic portion and said Michael acceptor of the elastomer portion.
